# DEMANDE DE BREVET EUROPEEN

(11) **EP 2 105 672 A1**
(43) Date de publication de la demande: **30.09.2009**
(21) Numéro de dépôt: 09360018.7
(22) Date de dépôt: 26.03.2009
(51) Int. Cl.: F24B 1/192, B08B 7/00, B08B 17/06, C03C 17/00, C03C 17/06, C03C 17/23

(54) **Produit catalytique de nettoyage appliqué par l'utilisateur sur la face intérieure d'une vitre d'un appareil de chauffage à combustion**

(30) Priorité: 27.03.2008 FR 0801681
(71) Demandeur: Fondis, 68800 Thann (FR)
(72) Inventeur: Haas, Frédéric, 68460 Lutterbach (FR); Ozil, Fabien, 68290 Rimbach Pres Masevaux (FR)
(74) Mandataire: Metz, Paul

(57) **Abrégé**

Le produit catalytique (8) est appliqué par l'utilisateur sur la face intérieure (6) de la vitre (5) d'un foyer fermé de cheminée (2) ou de tout autre appareil de chauffage (1) à combustion.

Il contient une composition catalytique qui abaisse la température d'inflammation des particules se déposant lors de la combustion sur la face intérieure de la vitre, pour qu'elles soient éliminées par la chaleur de la combustion dans les conditions normales de fonctionnement de l'appareil de chauffage.

Ce produit peut contenir de l'oxyde de cérium ou de cuivre, un alliage zircone-cérine, du palladium, du rhodium ou du platine.

Il se présente notamment sous forme d'une solution, d'une crème, d'un gel, d'une mousse, d'un aérosol, d'une poudre ou d'une pâte. Il peut être appliqué avant chaque séquence de chauffe, manuellement ou à l'aide d'un instrument, par exemple un pulvérisateur (10).

Cette invention intéresse notamment les fabricants et utilisateurs de cheminées.

## Description

La présente invention concerne un produit catalytique de nettoyage, à appliquer par l'utilisateur avant une combustion contre la face intérieure de la vitre d'une paroi vitrée d'un appareil de chauffage à combustion, pour obtenir la calcination ou l'incinération des particules résultant de la combustion.

Elle concerne également l'application et l'utilisation de ce produit pour le maintien à l'état propre et transparent de ladite vitre en permettant la calcination catalysée des dépôts de particules résultant de la combustion, par la chaleur produite par la combustion.

L'invention porte sur l'application d'un produit catalytique, préférentiellement en solution, en suspension ou mélangé à une base neutre, pour sa projection ou son application contre la face intérieure de la vitre d'une porte vitrée d'un foyer fermé de cheminée à bois en vue d'un auto-nettoyage pendant la combustion.

L'invention concerne aussi un procédé de nettoyage de la vitre d'un appareil de chauffage à combustion lors de son fonctionnement, qui consiste à appliquer avant combustion contre la face intérieure de la vitre un produit catalytique pour la calcination ou l'incinération des particules résultant de la combustion.

La combustion du bois ou d'autres combustibles provoque inévitablement des dépôts de particules : suie, bistre et autres imbrûlés notamment solides sur la vitre, ce qui a pour conséquence une opacification progressive de celle-ci. Ces dépôts opaques gênent la vision du foyer à travers la vitre et, n'étant pas uniformes, apportent un caractère disgracieux à la vision des flammes.

Pour éviter ces dépôts d'imbrûlés solides, une solution consiste habituellement à former un courant d'air en nappe qui vient balayer la face intérieure de la vitre. Ce courant d'air permet d'atténuer le dépôt des matières particulaires sur cette face intérieure de la vitre.

En utilisation, cette technique présente cependant une efficacité limitée et le dépôt d'imbrûlés n'est que ralenti.

Par la demande de brevet WO 03/027348, on connaît un four dont les parois sont recouvertes d'un revêtement céramique extrêmement poreux à base de nanoparticules. Les molécules de graisse dégagées lors de la cuisson des aliments dans ce four sont attirées dans les nombreux pores de ce revêtement autonettoyant et sont dégradées au contact de l'oxygène contenu dans ces pores.

S'il est satisfaisant pour les parois d'un four, un tel revêtement autonettoyant ne peut être appliqué sur la paroi vitrée de vision d'un appareil de chauffage. En effet, ce revêtement n'est pas transparent et est spécifiquement conçu pour attirer et dégrader les graisses de cuisson et non les dépôts carbonés de type suie ou autres imbrûlés produits par les combustibles des appareils de chauffage.

On connaît également par les brevets US 7.247.383 et WO 2006/089703, des vitres autonettoyantes équipant des chambres de combustion qui renferment un catalyseur directement intégré à la vitre lors de sa fabrication, par exemple réparti dans la masse de la vitre ou dans une couche de revêtement réalisée en usine. Selon les cas, ce catalyseur s'oppose à la fixation des imbrûlés sur la vitre ou favorise leur destruction pour empêcher l'obscurcissement de la vitre.

De telles vitres autonettoyantes traitées en usine ont un prix de revient élevé qui n'est pas compatible avec tous les modèles d'appareil de chauffage. En outre, ce revêtement d'usine se dégrade avec le temps et ces vitres autonettoyantes finissent par devenir opaques comme les vitres non traitées classiques. L'utilisateur est alors condamné à les remplacer ou à les nettoyer manuellement.

Que la vitre soit initialement non traitée ou que son revêtement ait perdu son efficacité, le dépôt opacifiant doit être régulièrement éliminé par l'utilisateur s'il veut garder l'esthétisme de la vision des flammes. Cette élimination se fait habituellement par un nettoyage long, difficile et fastidieux, d'autant plus qu'il est parfois difficile d'accéder à la face intérieure de la vitre. En outre, ce nettoyage n'est possible que lorsque la vitre est froide, la cheminée devant nécessairement être arrêtée. Or, cet arrêt peut être pénalisant lorsque la cheminée remplit un rôle de chauffage principal pour l'habitation.

Ainsi, le but de la présente invention est de proposer un moyen permettant d'amoindrir et d'éliminer en continu pendant la combustion le dépôt opacifiant, ce moyen devant être efficace, facile et rapide d'emploi pour l'utilisateur et compatible avec toutes les vitres pouvant équiper les appareils de chauffage qu'elles soient initialement traitées en usine ou non.

La solution retenue pour l'invention consiste pour l'utilisateur à projeter et plus généralement à appliquer sur la face intérieure de la vitre un produit catalytique pour la calcination ou l'incinération des particules résultant de la combustion et venant en contact avec la face intérieure de la vitre de la paroi vitrée d'un foyer fermé de cheminée ou de tout autre appareil de chauffage. Lors de l'utilisation de la cheminée, ce produit catalytique provoque l'élimination des dépôts de particules résultant de la combustion en abaissant la température de calcination de ceux-ci. A ce titre, il peut être utilisé de manière préventive afin d'empêcher tout dépôt opacifiant. Il peut également être utilisé ponctuellement pour réaliser une opération de nettoyage.

L'invention fournit ainsi un produit catalytique à appliquer sur la face intérieure de la vitre d'une paroi vitrée d'un appareil de chauffage à combustion.

Selon l'invention, ce produit n'est pas intégré à la vitre à la fabrication dans la masse de celle-ci ou dans une couche ou un revêtement réalisé en usine, mais il est destiné à être déposé ou appliqué à la surface de la face intérieure de la vitre par l'utilisateur de l'appareil de chauffage avant une combustion.

Ce produit contient une composition catalytique qui catalyse l'élimination des dépôts de particules provenant de la combustion et se déposant sur la face intérieure de la vitre, en abaissant la température d'inflammation de ces particules suffisamment pour qu'elles puissent être éliminées par la chaleur produite par la combustion dans les conditions normales de fonctionnement de l'appareil de chauffage.

L'invention fournit également un procédé de nettoyage de la face intérieure de la vitre d'une paroi vitrée d'un appareil de chauffage à combustion par calcination des dépôts de particules provenant de la combustion, selon lequel l'utilisateur de l'appareil de chauffage dépose ou applique contre la face intérieure de cette vitre le produit catalytique de l'invention, et il réalise ensuite une combustion dans l'appareil de chauffage dans les conditions normales de fonctionnement de l'appareil de chauffage.

L'invention enseigne aussi l'application de ce produit catalytique contre la face intérieure de la vitre d'une paroi vitrée d'un appareil de chauffage à combustion, par projection, pulvérisation, dépôt, enduction ou autre, en vue d'éviter ou d'éliminer les dépôts résultant de la combustion sur la face intérieure de cette vitre, cette application pouvant être réalisée manuellement ou à l'aide d'un instrument approprié.

Enfin, l'invention enseigne l'utilisation de ce produit catalytique pour son application sur la face intérieure de la vitre d'une paroi vitrée d'un appareil de chauffage à combustion en vue d'éviter ou d'éliminer les dépôts résultant de la combustion sur la face intérieure de cette vitre.

Outre ces différentes utilisations, l'invention propose également différentes compositions et formes pour le produit catalytique, ainsi que plusieurs moyens d'application de celui-ci sur la face intérieure de la vitre d'une paroi vitrée d'un appareil de chauffage.

Ceci est décrit en détail dans la description qui va suivre, description faite en référence aux dessins annexés, dans lesquels :
- la figure 1 est une vue simplifiée de trois quarts d'une cheminée dont la porte vitrée en position fermée peut être ouverte par pivotement ;
- la figure 2 est une vue simplifiée de trois quarts de la cheminée de la figure 1 dont la porte vitrée est ouverte ;
- la figure 3 est une vue simplifiée de trois quarts d'une cheminée dont la porte vitrée en position fermée peut être ouverte par coulissement vertical ;
- la figure 4 est une vue simplifiée de trois quarts de la cheminée de la figure 3 dont la porte vitrée est ouverte ;
- la figure 5 est une vue schématique en coupe d'une cheminée comportant une vitre sur la face arrière de laquelle un utilisateur projette une couche de produit catalytique ;
- la figure 6 est une vue schématique agrandie du détail de la vitre encerclé sur la figure 5 ;
- la figure 7 est une vue schématique en coupe d'une cheminée comportant une vitre sur la face arrière de laquelle une couche de produit catalytique a été appliquée ; et
- la figure 8 est une vue schématique agrandie du détail de la vitre encerclé sur la figure 7.

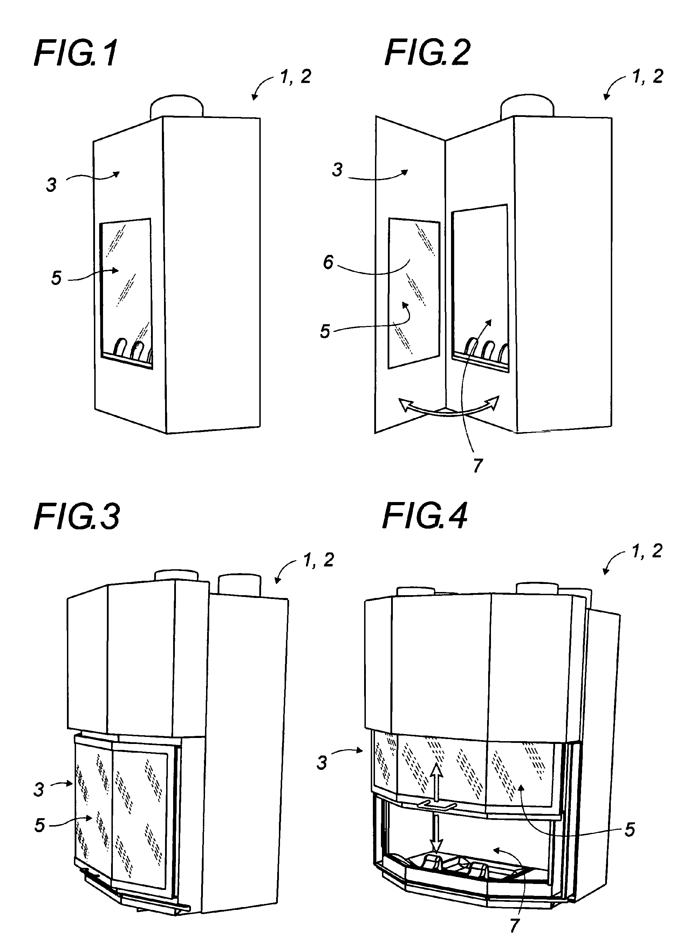

Sur les figures 1 à 4, on a représenté un appareil de chauffage 1 sous la forme d'un foyer fermé de cheminée 2 dont deux modèles couramment utilisés ont été dessinés. Ces modèles de foyers fermés de cheminée 2 sont donnés à titre d'exemple uniquement et ne doivent pas être interprétés de manière restrictive.

En effet, l'invention peut s'appliquer à tout type de foyer fermé de cheminée 2 comportant une paroi vitrée 3. Par extension, l'invention peut également s'appliquer à tout appareil de chauffage à combustion comportant une paroi vitrée 3, quels que soient sa nature, son modèle et le combustible utilisé. Il peut ainsi s'agir de tout appareil de chauffage à combustible solide, liquide ou gazeux : cheminée, poêle de chauffage, chaudière ou autre. Par cheminée, nous entendrons donc également par la suite les dispositifs équivalents précités.

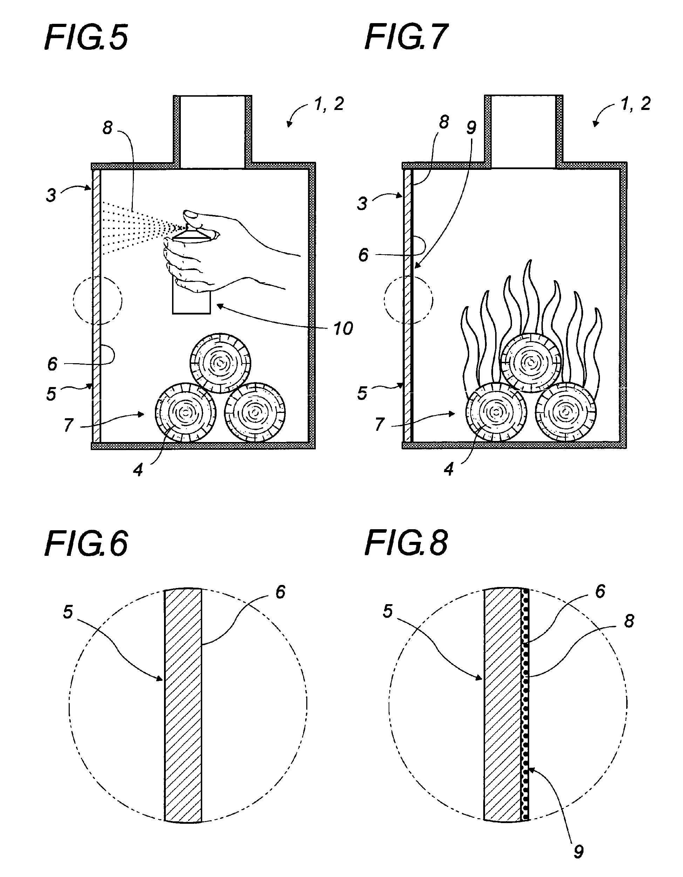

De même, sur les figures 5 et 7, on a représenté le combustible sous la forme de bûches de bois 4 car il s'agit du combustible le plus fréquemment utilisé dans les cheminées. Néanmoins, l'invention peut être utilisée quel que soit le combustible et se justifie dès lors que la combustion génère un dépôt opacifiant sur la face intérieure de la vitre.

Enfin, la paroi vitrée 3 peut également être quelconque. Il peut s'agir par exemple d'une porte vitrée, d'une fenêtre, d'un hublot, d'un regard ou autre, pouvant s'ouvrir ou non, mais dont la face intérieure est accessible entièrement ou partiellement pour que l'utilisateur puisse y appliquer le produit catalytique de l'invention.

Dans la suite de cette description, on désignera par face intérieure et par face extérieure de la vitre, les faces de celle-ci situées respectivement du côté de l'enceinte de combustion de l'appareil de chauffage à combustion et du côté de l'habitation.

Chacun des foyers fermés de cheminée 2 représentés présente une paroi vitrée 3 comportant une vitre 5 dont la face intérieure 6 est susceptible d'être encrassée par des dépôts de particules imbrûlées provenant de la combustion se déroulant dans l'enceinte de combustion 7 du foyer fermé de cheminée 2.

La vitre 5 de l'appareil de chauffage 1 peut être quelconque. Il peut s'agir par exemple d'une vitre à simple ou double vitrage, d'une vitre monolithique ou feuilletée, d'une vitre simple ou comportant une ou plusieurs couches et/ou un ou plusieurs revêtements esthétiques ou fonctionnels, ou autre.

L'invention consiste à projeter, déposer, enduire ou autrement appliquer contre la face intérieure 6 de la vitre 5 un produit catalytique 8 qui abaisse la température d'inflammation des dépôts notamment particulaires résultant de la combustion qui viennent se déposer sur cette face 6 de la vitre 5. La chaleur produite par la combustion se déroulant au niveau de l'enceinte de combustion 7 est alors suffisante pour provoquer la calcination et donc l'élimination de ces dépôts dans les conditions normales de fonctionnement de l'appareil de chauffage.

Sur la figure 5, un utilisateur projette une couche 9, préférentiellement un film, de produit catalytique 8 contre la face intérieure 6 de la vitre 5 du foyer fermé de cheminée 2.

Ce produit catalytique 8 est déposé sur la face intérieure 6 de la vitre 5 afin d'y activer la décomposition thermique des imbrûlés lors de l'utilisation de la cheminée 2, notamment des imbrûlés carbonés provoquant une opacification.

Selon un mode de réalisation préféré de l'invention, le produit catalytique 8 comprend une composition catalytique qui contient un ou plusieurs composés choisis dans le groupe constitué par les éléments du huitième sous-groupe du tableau périodique, les terres rares et les sels, les complexes, les alliages et les oxydes de ceux-ci.

Préférentiellement, la composition catalytique comprend un ou plusieurs oxydes métalliques, par exemple tels que l'oxyde de cérium, l'oxyde de cuivre, l'oxyde de manganèse, l'oxyde de fer, l'oxyde de cobalt et/ou l'oxyde de nickel.

Elle peut contenir également un ou plusieurs métaux nobles, tels que le palladium, le rhodium ou le platine, ou encore un alliage zircone-cérine.

Toute autre composition permettant d'activer la décomposition thermique des imbrûlés, par exemple en servant de réservoir d'oxygène, pourra néanmoins être utilisée dans le produit catalytique.

Selon un mode de réalisation préféré de l'invention, la composition catalytique est un produit liquide ou semi-liquide à pulvériser ou se trouve en solution ou en suspension dans un produit liquide ou semi-liquide à pulvériser, par exemple au moyen d'un pulvérisateur, d'une bombe ou d'un flacon aérosol ou d'un autre dispositif approprié.

Le produit catalytique 8 peut également former une mousse lors de son application ou se présenter sous la forme d'un liquide, d'une émulsion, d'une crème, d'une mousse, d'un gel, d'une poudre, d'une poudre prise dans une base adhésive, d'un aérosol, d'une suspension, d'une pâte, d'une cire, d'un enduit, d'une colle, d'un bloc solide à étaler, etc.

La solution catalytique est préférentiellement composée d'un solvant, d'une base liquide ou d'une base semi-liquide, par exemple aqueuse, qui s'évapore ou se vaporise après application et d'une suspension de principe actif qui reste sur la surface vitrée après évaporation ou vaporisation.

Selon un mode de réalisation préféré de l'invention, le produit catalytique 8 est projeté sur la face intérieure 6 de la vitre 5 au moyen d'un pulvérisateur 10 formant un, film liquide. Cette technique permet avantageusement de projeter le produit catalytique 8 sur la face intérieure 6 de la vitre 5 même lorsque celle-ci n'est pas facilement accessible.

L'application du produit catalytique 8 peut cependant être effectuée par tout autre moyen adapté, par exemple à l'aide d'une éponge, d'un chiffon ou de tout autre applicateur ou instrument spécifique.

Par applicateur spécifique, on entend un applicateur spécialement étudié pour déposer le produit catalytique 8 selon l'invention en couche 9 sur la face intérieure 6 de la vitre 5 ou enduire celle-ci avec ce produit, et par exemple accompagnant ou faisant corps avec le contenant renfermant le produit catalytique 8.

Selon un mode de réalisation préféré du procédé de nettoyage selon l'invention, l'utilisateur dépose ou applique le produit catalytique 8 par pulvérisation d'une solution ou d'une mousse. L'utilisateur peut déposer ou appliquer le produit catalytique 8 par dépôt manuel direct ou sous la forme d'une crème, d'un gel ou d'une pâte.

L'application du produit catalytique 8 sur la face intérieure 6 de la vitre 5 est effectuée par l'utilisateur préférentiellement de manière régulière et préventive, par exemple avant chaque cycle de chauffe, afin d'empêcher la formation de dépôts opaques sur la vitre 5. Cette application peut être renouvelée régulièrement par l'utilisateur en cas de consommation ou de disparition de la couche 9 de produit catalytique 8.

L'application peut également s'effectuer de manière ponctuelle, par exemple lorsque l'utilisateur souhaite nettoyer la vitre 5 de sa cheminée 2. Dans ce cas, le produit catalytique 8 est appliqué directement sur les dépôts opaques à éliminer, puis le combustible est allumé dans le foyer fermé de la cheminée 2 pour que la chaleur élime les dépôts activés par le catalyseur.

Avantageusement, on peut appliquer le produit catalytique 8 selon l'invention de manière régulière et en ajouter ponctuellement une quantité supplémentaire en cas d'apparition de dépôts opaques signifiant que la quantité précédemment appliquée sur la vitre 5 est devenu insuffisante.

Comme représenté sur les figures 7 et 8, le produit catalytique 8 est préférentiellement déposé sous la forme d'un film ou appliqué en couche mince 9 sur la face intérieure 6 de la vitre 5. Sur ces figures, les différentes épaisseurs sont données de manière purement illustrative et ne doivent pas être interprétées de manière restrictive.

Avantageusement, l'homme du métier pourra remarquer que cette invention est pleinement compatible avec les cheminées dans lesquelles un courant d'air est projeté en nappe contre la face intérieure de la vitre d'exposition.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Produit catalytique (8) à appliquer sur la face intérieure (6) de la vitre (5) d'une paroi vitrée (3) d'un appareil de chauffage (1) à combustion, **caractérisé en ce qu'**il n'est pas intégré à la vitre (5) à la fabrication dans la masse de celle-ci ou dans une couche ou un revêtement réalisé en usine, mais est destiné à être déposé ou appliqué à la surface de la face intérieure (6) de la vitre (5) par l'utilisateur de l'appareil de chauffage (1) avant une combustion et **en ce qu'**il contient une composition catalytique qui catalyse l'élimination des dépôts de particules provenant de la combustion et se déposant sur la face intérieure (6) de la vitre (5), en abaissant la température d'inflammation de ces particules suffisamment pour qu'elles puissent être éliminées par la chaleur produite par la combustion dans les conditions normales de fonctionnement de l'appareil de chauffage (1).

2. Produit catalytique (8) selon la revendication 1, **caractérisé en ce que** la composition catalytique est un produit liquide ou semi-liquide à pulvériser ou se trouve en solution ou en suspension dans un produit liquide ou semi-liquide à pulvériser.

3. Produit catalytique (8) selon la revendication 1, **caractérisé en ce qu'**il forme une mousse lors de son application.

4. Produit catalytique (8) selon la revendication 1, **caractérisé en ce qu'**il se présente sous la forme d'un liquide, d'une émulsion, d'une crème, d'une mousse, d'un gel, d'une poudre, d'une poudre prise dans une base adhésive, d'une suspension, d'un aérosol, d'une pâte, d'une colle, d'une cire, d'un enduit ou d'un bloc solide à étaler.

5. Produit catalytique (8) selon l'une quelconque des revendications précédentes, **caractérisé en ce que** la composition catalytique contient au moins un composé choisi dans le groupe constitué par les éléments du huitième sous-groupe du tableau périodique, les terres rares et les sels, les complexes, les alliages et les oxydes de ceux-ci.

6. Produit catalytique (8) selon la revendication précédente, **caractérisé en ce que** la composition catalytique contient au moins un composé choisi parmi le platine, le palladium et le rhodium.

7. Produit catalytique (8) selon l'une quelconque des revendications 1 à 4, **caractérisé en ce que** la composition catalytique contient au moins un oxyde métallique.

8. Produit catalytique (8) selon la revendication précédente, **caractérisé en ce que** la composition catalytique contient au moins un composé choisi parmi l'oxyde de cérium, l'oxyde de cuivre, l'oxyde de manganèse, l'oxyde de fer, l'oxyde de cobalt et l'oxyde de nickel.

9. Produit catalytique (8) selon l'une quelconque des revendications 1 à 4, **caractérisé en ce que** la composition catalytique contient un alliage zircone-cérine.

10. Procédé de nettoyage de la face intérieure (6) de la vitre (5) d'une paroi vitrée (3) d'un appareil de chauffage (1) à combustion par calcination des dépôts de particules provenant de la combustion, **caractérisé en ce que** l'utilisateur de l'appareil de chauffage dépose ou applique contre la face intérieure (6) de cette vitre (5) un produit catalytique (8) selon l'une quelconque des revendications précédentes et **en ce qu'**il réalise ensuite une combustion dans l'appareil de chauffage (1) dans les conditions normales de fonctionnement de l'appareil de chauffage.

11. Procédé de nettoyage selon la revendication précédente, **caractérisé en ce que** l'utilisateur de l'appareil de chauffage (1) dépose ou applique le produit catalytique (8) par pulvérisation d'une solution ou d'une mousse.

12. Procédé de nettoyage selon la revendication 10, **caractérisé en ce que** l'utilisateur de l'appareil de chauffage (1) dépose ou applique le produit catalytique (8) par dépôt manuel direct ou sous la forme d'une crème, d'un gel ou d'une pâte.

13. Application d'un produit catalytique (8) selon l'une quelconque des revendications 1 à 9 contre la face intérieure (6) de la vitre (5) d'une paroi vitrée (3) d'un appareil de chauffage (1) à combustion, par projection, pulvérisation, dépôt ou enduction en vue d'éviter ou d'éliminer les dépôts résultant de la combustion sur la face intérieure (6) de cette vitre (5).

14. Application selon la revendication précédente **caractérisée en ce qu'**elle est réalisée manuellement ou à l'aide d'un instrument approprié.

15. Utilisation d'un produit catalytique selon l'une quelconque des revendications 1 à 9 pour son application sur la face intérieure (6) de la vitre (5) d'une paroi vitrée (3) d'un appareil de chauffage (1) à combustion en vue d'éviter ou d'éliminer les dépôts résultant de la combustion sur la face intérieure (6) de cette vitre (5).
